# EUROPEAN PATENT SPECIFICATION

(11) **EP 3 018 937 B1**
(45) Date of publication and mention of the grant of the patent: **19.08.2020**
(21) Application number: 14306777.5
(22) Date of filing: 06.11.2014
(51) Int. Cl.: H04W 36/14, H04W 88/06, H04W 84/12, H04W 36/00

(54) **Switching access connections between a user equipment and a packet data network**
Umschalten von Zugangsverbindungen zwischen einem Benutzergerät und einem Paketdatennetzwerk
Connexions d'accès de commutation entre un équipement utilisateur et un réseau de données par paquets

(43) Date of publication of application: 11.05.2016
(73) Proprietor: Alcatel Lucent, 91620 Nozay (FR)
(72) Inventor: Van de Velde, Thierry, 2018 Antwerp (BE)
(74) Representative: Mills, Julia

(56) References cited:
- EP-A2- 2 688 363
- "3rd Generation Partnership Project; Technical Specification Group Services and System Aspects; Study on S2a Mobility based on GPRS Tunnelling Protocol (GTP) and Wireless Local Area Network (WLAN) access to the Enhanced Packet Core (EPC) network (SaMOG); Stage 2 (Release 12)", 3GPP STANDARD; 3GPP TR 23.852, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 12 September 2013 (2013-09-12), pages 1-157, XP050712250, [retrieved on 2013-09-12]

## Description

### FIELD OF THE INVENTION

The field of the invention relates to wireless communication networks and the transfer of data between a mobile user equipment and a packet data network.

### BACKGROUND

Cellular networks are known in which user equipment UE are able to communicate with a packet data network using radio coverage provided in cells by base stations. A user equipment moving between cells will have its connection to the network transferred to a new base station and various techniques have been devised such that the communication link is not lost and the handover between cells occurs seamlessly for the user.

In this regard the UE will continuously monitor the strength of the signals from neighbouring base stations and will pass this radio quality information to the base station to which it is connected. This source base station and the UE take this information into account when making a decision to reselect a target base station. When such a decision is made the source base station contacts a more central network control node, in LTE (long term evolution cellular network) the mobility management entity MME, which executes the handover procedure by updating the UE's mobility management context and any pre-existing UE session or connection. These can also be transferred to a different target MME within the same administrative domain as the source MME. The network may even assist the UE in achieving the handover without wasting time to re-synchronise with the service information broadcast cycle at the target base station. Finally, IP packets having arrived at the source base station may be transferred to the target base station before new IP packets are delivered directly to the target base station.

In addition to cellular wireless communication networks other IP Connectivity Access Networks are known such as Wi-Fi networks, xDSL, DOCSIS, GPON or other fixed and wireless networks. Wi-Fi access networks for example typically cover smaller geographic areas and are operated by independent organizations.

Though some modern Wi-Fi access networks have central access gateways acting as anchoring points for mobility (Access Controller, Trusted WLAN Access Gateway or evolved Packet Data Gateway), the decision to associate with a new access point resides entirely within the UE. There are no standard mechanisms for an access gateway to transfer the UE session to a different access gateway, even where they are within the same organizational entity. This means that today the continuity of downlink IP packet delivery is only ensured among access points that are connected to a single access gateway.

As these alternative access technologies to connect to packet data networks become ever more prevalent, UEs are increasingly switching access connections between such non-cellular access networks, between access gateways within a single non-cellular access network, and between non-cellular and cellular networks. This can create frequent disruptions in service to the end user, for example when a different IP address is assigned to the UE or when downlink IP packets continue to arrive at the previous access network, access gateway and access point for a long time after the UE is no longer connected, where they are discarded.

Multiple protocols have therefore been devised seeking to permit the UE to change access connections while preserving IP connectivity to a packet data network, the most prevalent being Mobile IP (MIP) and GPRS Tunnelling Protocol (GTP), besides other technologies involving encapsulation of the original IP packet into a new IP protocol (also known as the overlay network). For MIP and GTP seamless mobility is attained by a mobility anchor which is directly interconnected to the packet data network with which connectivity must be preserved: a home agent HA or packet data network gateway PGW. Advanced HA and PGW even support multiple concurrent access connections to a single packet data network.

However when the UE surfaces in a new access network, the access network (its cellular mobility manager or non-cellular access gateway) does not know whether a PDN connection has already been established to a packet data network, and if so, to which packet data network, and via which HA or PGW. Therefore in many cases a needless second PDN connection is set up, and the UE experiences disruptions in service. Worse still, some UEs do not support seamless handover and are expecting a second PDN connection to be established, with a different IP address, whereas the selected HAor PDN GW may grant the same IP address, resulting in a crash within the UE.

It would be desirable if a UE could change access connections to a packet data network, where the access connections are made via different access networks at least one being a non-cellular access network and in some cases where the access connections use different access technologies, in a relatively seamless fashion.

3GPPTR23.852 V12.0.0 (2013-09): Study on S2a Mobility based on GPRS Tunnelling Protocol (GTP) and Wireless local Area network (WLAN) access to the Enhanced Packet Core (EPC) network (SaMOG); Stage 2 (Release 12)" pages 1 - 157 discloses a Trusted WLAN AAA Proxy function and is concerned with increasing WLAN security without impacting the UE. It discloses the procedure to create an access connection over a trusted non-3GPP access network.

EP2688363 discloses a transmission system which comprises a cellular access point and a WLAN access point that act together and in negotiation with the UE to transmit data, a portion of the data being transmitted by the cellular system and a portion by the WLAN. It is concerned with offloading some of its data transport to a WLAN and thus, the connection to the WLAN occurs when there is an existing cellular connection.

### SUMMARY

A first aspect of the present invention provides a method of amending signals in the control plane to facilitate data transfer between a user equipment and a packet data network via different access connections each using a different access network at least one being a non-cellular access network, said method comprising:
receiving a signal in the control plane requesting a change in an access connection to be used to transmit data between said packet data network and said user equipment;
in response to receiving said signal in the control plane requesting said change in said access connection accessing an authorisation database storing information regarding said user equipment; and
determining from information accessed in said authorisation database whether said user equipment has a current access connection to said packet data network; and
in response to determining that said user equipment does have said current access connection, amending said signal in the control plane to generate a modified signal in the control plane and transmitting said modified signal in said control plane to a packet data network gateway such that an access connection used to transmit data to said user equipment is changed.

The present invention recognises that although within a cellular access network and within some non-cellular access networks there are procedures for transferring access connections between base stations or access points such that as the user equipment moves the connections can be handed over in a seamless or near seamless fashion, this is not the case for mobility between different access networks or between access gateways within a non-cellular access network. It also recognises that the use of local non-cellular access networks such as WLAN or Wi-Fi networks is increasing and although initially such networks simply provided access to packet data networks in one place such as the home, they are becoming more widespread and may provide network access across large public spaces. Most user equipment is designed to preferentially connect to a Wi-Fi system where one is configured and available and this can cause frequent service disruptions for user equipment automatically switching access connections between local Wi-Fi networks and the cellular network as a user moves. It should be noted that the change in access connection to a different access network, may involve a change in access technology, where for example the access connection changes between a Wi-Fi access network and a cellular access network, or it may be between two non-cellular access networks of the same access technology such as two Wi-Fi networks. Such non-cellular networks currently have no provision for receiving information from other access networks such as cellular base stations or indeed from each other regarding current connections that the user equipment may have with these networks. This provides its own challenges when switching access connections.

The present invention has addressed these problems by providing access to an authorisation database in response to a control signal requesting a change to an access connection and determining from information accessed whether the user equipment currently has an access connection to a packet data network PDN provided by another access network. In this way information regarding other access connections and packet data network connections can be made available and the control signal can be amended to take into account any current access connections such that an access connection for transmitting data can be changed to another access network in such a way that there is little or no disturbance to the data transport.

In this regard some embodiments take advantage of the fact that the storage of information regarding user equipment connections already exists for cellular systems for controlling access and for accounting and thus, the database required for the present invention can in some cases be implemented by amendment to such an existing database.

An access connection provides a user plane pathway for data between user equipment and the packet data network (PDN) gateway (PGW). Changes in a user plane pathway result in data being transmitted via different access connections. In a 3GPP LTE access network for example, an evolved packet system (EPS) session would correspond to an access connection, and the user plane pathway would be established via the S1-U and S5-U or S8-U reference points.

It should be noted that the method controls the changing of the access connection for the data path by amending signals in the control plane. The volume of packets transmitted is far less in the control plane than in the user plane and thus, this amendment can be done efficiently without the requirement for undue processing power, making it suitable for execution on virtual machines for example.

It should be noted that a change in an access connection may be a deletion of a connection, a modification of an existing connection or a creation of an access connection. The access connection change may involve an access connection being replaced by a connection over a different access network to the same packet data network, or where there are multiple access connections between a user equipment and a packet data network, it may involve the addition of an access connection over a different access network to the set of current access connections between said user equipment and said packet data network, or the suppression of one or multiple current access connections from the current set of current access connections

In some embodiments, the method further comprises storing information regarding said access connection to be used to transmit said data.

In order for the database to be kept up to date with current access connections of user equipment, it is advantageous when access connections are changed that information regarding the change in access connection is stored within the database.

In some embodiments, said signal in the control plane is received from one of: a device measuring quality of said current access connection and an IP connectivity access network gateway.

The control signal requesting the change in access may be received from an IP connectivity access network gateway, in response to a request coming from a user equipment or it may come from a device that measures quality of a current access connection and can therefore indicate when the quality of said access connection has fallen and one or more different access connections may be required for traffic to and from a packet data network. In this regard, IP connectivity access network gateways are devices such as the Mobility Management Entity (MME) and Serving Gateway (SGW) in a 4G network or a Trusted Wireless Local Area Network Gateway (TWAG) in a Wi-Fi system for example.

Where the control signal is received from the IP connectivity access network gateway it may also be the result of subscriber host connectivity verification or keep -alive procedures, whereby the access network gateway periodically assesses the connectivity to the user equipment or the quality of the access connection.

In some embodiments, said step of amending said signal in the control plane comprises amending said control signal to request a creation of a new access connection with a same IP address for said user equipment as said current access connection.

A problem that may arise with a UE when switching of access connections is that when the new access connection is created a different IP address may be assigned to the UE by the PGW, GGSN or combined PGW/GGSN. Where the UE is running applications such a change in IP address may cause problems to the execution of these applications and cause them or the entire operating system to fail. These problems have been addressed in this embodiment by amending the control signal such that the access connection requests a new access connection with a same IP address. In some embodiments, this can be indicated by inserting a handover indicator within a create access connection request. By assigning the user equipment the same IP address for the new access connection and changing the user plane pathway to the different access network by providing a different transport address then any applications running on the user equipment can continue to operate seamlessly.

In some embodiments, said step of amending said signal in the control plane comprises amending said control signal such that said current access connection is rendered dormant, said dormant access connection being an access connection where an IP address is still assigned to said user equipment for said access connection but said access connection is not currently used for transmitting data.

One problem that may arise when access connections are changed between different access networks, one being a non-cellular network, is that a PGW will generally delete any ongoing cellular access connection before assigning the IP address for a new non-cellular access connection. This can cause problems where a UE is configured to try to re-establish a cellular connection when one has been lost, as is the case in 4G systems. A UE trying to reconnect to the cellular network while a WI-FI connection is also trying to be made can cause the PGW to get into a harmful loop.

This problem has been addressed in this method by amending the control signal such that when an access network requests a new access connection and the PGW is attempting to delete the current access connection, that current access connection is not deleted and it will then move into a dormant state as no data is sent via the connection

The control signal requesting a modified connection may also indication that the IP address should be preserved for the UE, and the current access connection will not be deleted and may therefore go into dormant state. In an LTE system this means that the UE is still registered at the MME and the evolved mobility management and evolved session management context for it are still stored, but that the eNodeB has decided to place the UE into evolved connection management ECM-idle state. In effect the new access connection is hidden from the previous access network, and although data is no longer transmitted using the previous access connection the IP address assigned to the user equipment for that access connection and the context of user equipment is still stored and the user equipment is not notified of the deletion of the access connection and therefore does not try to reconnect.

Furthermore, by assigning the user equipment the same IP address for the new access connection and changing the user plane pathway to the different access network by providing a different transport address then any applications running on the user equipment can continue to operate seamlessly.

In some embodiments, the method further comprises intercepting update signals indicating changes to dormant access connections such that they do not arrive at said packet data network gateway and storing said indicated changes.

Where there are dormant access connections within such a system, the user equipment will continue to transmit update signals such as tracking area updates for cellular systems and it is important that the corresponding update signals from the access network gateway do not arrive at the packet data network gateway as this could result in it amending the access connection actually in use by the UE. The method therefore comprises intercepting such update signals and storing the ind icated changes. By storing the indicated changes they can be retrieved later when the dormant access connection is required to be re-activated.

Although the storing of the indicated changes may be done locally, in some embodiments they are stored in the authorisation database.

Storing the information in the authorisation database allows it to be accessed with the other access connection information and also allows different devices controlling this handover to access the information in the case that there are multiple handover controller devices provided they have access to this database.

In some embodiments, in response to receiving a reactivation signal in the control plane to reactivate said dormant access connection, said signal in the control plane is amended to indicate at least some of said indicated changes.

When a dormant access connection is reactivated, then if there have been changes in perhaps the location of the user equipment it is important that these changes are notified so that the dormant access connection can be reactivated successfully. Thus, when the control signal is to reactivate a dormant access connection, it is amended to indicate at least some of these changes which have previously been stored. In this regard a control signal to reactivate a dormant access connection may be a request to establish a session with an access network with which the user equipment has a dormant access connection. As the method is aware of the dormant access connection since information regarding it is stored in the authorisation database, this session request is treated as a request to re-establish the dormant access connection, which will result in the preservation of the UE IP address.

In some embodiments, said step of determining further comprises determining whether said user equipment supports hybrid data access and when not, amending said signal in the control plane to render said current access connection dormant and to create a new access connection with a same IP address for said user equipment as said current access connection, and when so amending said control signal to create a new additional access connection.

Where a user equipment supports hybrid data access then more than one access connection can exist concurrently to a single packet data network connection, so that in response to a request to change an access connection where there is an existing connection it does not need to be deleted before the establishment of the new connection. The present invention recognises that the method for controlling the handover can take account of this if it can determine the properties of the user equipment from the authorisation database and where hybrid access is supported by the user equipment it can amend the control signal to create an additional access connection. In this way the method selects the appropriate access connection changes in dependence upon both the properties of the user equipment and any existing packet data network connections and access connections.

In some embodiments the method further comprises in response to determining that said user equipment does support hybrid data access, further determining whether said packet data network supports hybrid access and when not, amending said signal in the control plane to create a new additional access connection using a different IP address for said user equipment than said existing access connection and when so amending said control signal to create a new additional access connection using a same IP address for said user equipment as said existing access connection.

Where the user equipment does support hybrid data access then whether or not the multiple access connections should share the same IP address for the UE depends on whether the PDN gateway supports hybrid access and whether within the PDN gateway hybrid access is configured for access to said packet data network. The method can in some embodiments determine this from the authorisation database and can amend the control signal to either create a new access connection with or without the same IP address as the current access connection or access connections as appropriate.

In some embodiments, said authorisation database comprises further information about properties of said user equipment and properties of at least one of said packet data network gateway and said packet data network, and a subscription of said user equipment, wherein said amending of said signal in the control plane is performed in response to said further information.

In addition to storing information regarding current access connections, the authorisation database may further store information regarding properties of the user equipment and properties of the packet data network gateway, the packet data network and perhaps the subscription of the user equipment. In this regard, it should be noted that in some cases the user equipment and/or packet data network or packet data network gateway may be able to support hybrid access; that is the use of multiple access connections for the transmission of data to and from a same packet data network connection. If this is the case, then multiple access connections could be instigated in response to a change access connection request and in some embodiments, the method is operable to detect whether or not such properties are available and if so, to amend the control signal differently such that rather than rendering current access connections dormant, a set of access connections are provided.

In some embodiments, said step of amending said signal in the control plane comprises amending said control signal to indicate attributes required for said access connection in dependence upon information retrieved from said authorisation database.

The authorisation database may also store information regarding attributes required for certain access connections. In this regard, an access request may indicate a particular packet data network it wishes to connect to and/or a particular property required for the access connection. It may do this using a particular code such as an access point name and the authorisation database may store a mapping of these codes to the attribute properties. Thus, in response to receipt of the control signal and on accessing the authorisation database, the attribute required for the access connection can be determined and the control signal amended to include such information.

In some embodiments, said amended signal in the control plane comprises one of: modification of said current access connection request, a create session request with an indication to obtain a same IP address as is currently used for an existing access connection, and a create session request without said indication.

The control signal may be amended in a number of ways, in some cases it may be amended to request a modification of the current access connection and in this case, the current access connection may be rendered dormant and a new access connection formed using the same IP address for the user equipment. This may take the form of a modified bearer request and will result in a new transport address being used by the packet data network gateway to reach the access network gateway, allowing switching between the access connections. In some embodiments amending the control signal comprises inserting a handover indicator into the signal to indicate that a same IP address is to be assigned to the UE. Alternatively, in some cases the control signal may be amended to suppress a handover indicator in the control signal. This may be appropriate where no current access connection exists at the PGW as in such a case a handover indicator will result in the PGW rejecting session establishment. Alternatively, where the properties of the user equipment and the packet data network gateway are such that multiple concurrent access connections are supported to a single packet data network, then the control signal might be amended to a create session request with an indication to obtain a same IP address as is currently used for an existing access connection.

In some embodiments, the method comprises determining from information accessed in said authorisation database that said user equipment has said current access connection, and said user equipment and said packet data network gateway both support hybrid access to said packet data network, and amending said control signal to a create session request with an indication to obtain a same IP address.

In the case that the user equipment and the packet data network gateway both support hybrid access to the packet data network, hybrid access allowing the utilisation of multiple access connections for transmitting data via a same packet data network connection, then rather than creating a new access connection and making one of the access connections dormant, two or more concurrent access connections can be envisaged and they may be given the same IP address, the packet data network determining which data pathway to use to transmit each service data flow.

In other embodiments, the user equipment may support hybrid access while the packet data network gateway may not support hybrid access to the packet data network, in this case, the control signal can simply be a create session request and a new access connection is generated with a different IP address and the user equipment can receive data from both of these connections.

In some embodiments, said signal in the control plane requesting a change in said access connection comprises one of a request to establish a new access connection, a request to delete an existing access connection and a request to switch a user plane datapath from one access connection to another access connection.

The request for a change in the access connection may be a number of things including a request to establish a new access request connection, a request to delete an existing access connection perhaps where a drop in quality of that connection has been detected and a request to switch the user plane datapath from one access connection to another access connection, perhaps where a different access network has been detected by the user equipment.

A second aspect of the present invention provides a computer program which when executed on a data processing apparatus, is operable to control said data processing apparatus to perform steps in a method according to a first aspect of the present invention.

A third aspect of the present invention provides a handover controller configured to amend signals in the control plane to facilitate data transfer between a user equipment and a packet data network via different access connections each using a different access network at least one being a non-cellular access network, said handover controller comprising:
a receiver operable to receive a signal in the control plane requesting a change in an access connection to be used to transmit data between said packet data network and said user equipment;
accessing logic operable in response to said receiver receiving said signal in the control plane requesting said change in said access connection, to access an authorisation database storing information regarding said user equipment; and
control logic operable to analyse information accessed in said authorisation database and determine whether said user equipment has a current access connection to said packet data network and in response to determining that said user equipment does have said current access connection to amend said signal in the control plane to generate a modified signal in the control plane; and
a transmitter operable to transmit said modified control signal to a packet data network gateway such that an access connection used to transmit data to said user equipment is changed.

In some embodiments said control logic is operable to amend said signal in the control plane to render said current access connection dormant and to create a new access connection with a same IP address for said user equipment as said current access connection, said dormant access connection being an access connection where an IP address is still assigned to said user equipment for said access connection but said access connection is not currently used for transmitting data.

In some embodiments said control logic is operable to determine whether said user equipment supports hybrid data access and when not to amend said control signal to render said current access connection dormant and to create a new access connection with a same IP address for said user equipment and when so to amend said control signal to create a new additional access connection.

In some embodiments said control logic is further operable to determine that both said user equipment and said packet data network supports hybrid access and to amend said control signal to a create session request with an indication to obtain a same IP address.

Further particular and preferred aspects are set out in the accompanying independent and dependent claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 schematically shows different network access connections that may be available to a user equipment for accessing a packet data network;
Figure 2 shows a similar system with a seamless handover controller according to an embodiment of the present invention;
Figure 3 schematically shows the system of Figure 2 with steps performed when a user equipment attaches to a LTE network and no non-3GPP connections exists yet;
Figure 4 shows s shows the system of Figure 2 with steps performed when the UE connects to the packet data network via a trusted WLAN network;
Figure 5 schematically shows the system of Figure 2 with steps performed when the UE is connected to the trusted WLAN network and is moving within the LTE network;
Figure 6 schematically shows the system of Figure 2 with steps performed during the re-establishment of a dormant LTE access connection;
Figure 7 schematically shows steps performed in a method when a VoLTE session starts;
Figure 8 shows steps performed in a method when the user equipment transfers its access connection to a trusted WLAN network during an IMS (IP multimedia system) session;
Figure 9 shows steps performed in a method when a quality drop is measured for traffic using the access connection to a trusted WLAN network during an IMS session;
Figure 10 shows steps performed when a user equipment attaches to a LTE network and a non-3GPP access connection already exists, in a case where the user equipment does not support IP address preservation between both access networks;
Figure 11 shows steps performed when a user equipment attaches to a LTE network and a non-3GPP access connection already exists, in a case where the user equipment does support IP address preservation between both access networks, that the handover indication can be set and the user equipment supports no hybrid access;
Figure 12 shows subsequent steps performed following those of figure 11;
Figure 13 shows steps performed when a user equipment attaches to a LTE network and a non-3GPP access connection already exists, in a case where the user equipment supports IP address preservation between both access networks, that the handover indication can be set and the user equipment supports hybrid access;
Figure 14 shows subsequent steps performed following those of figure 13;
Figure 15 shows steps performed when a user equipment attaches to a 2G or 3G network and a non-3GPP access connection already exists, in a case where the user equipment supports IP address preservation between both access networks, that the handover indication cannot be set and the user equipment does not support hybrid access;
Figure 16 shows steps performed when a user equipment attaches to a 2G or 3G network and a non-3GPP access connection already exists, in a case where the user equipment supports IP address preservation between both access networks, that the handover indication cannot be set and the user equipment does support hybrid access;
Figure 17 shows steps performed when a user equipment attaches to a non-3GPP access network such as a Trusted WLAN and no other access connection exists;
Figure 18 shows a flow diagram illustrating steps performed in a method according to an embodiment of the present invention, when an attach signal is received from a 3GPP access network; and
Figure 19 shows a flow diagram illustrating steps performed in a method according to an embodiment of the present invention, when an attach signal is received from a non-3GPP access network.

### DESCRIPTION OF THE EMBODIMENTS

Before discussing the embodiments in any more detail, first an overview will be provided.

When transitioning between cellular 3GPP and non-cellular access networks, user equipment conventionally has to obtain a new IP address and several applications running on or behind these UE are therefore interrupted or impacted.

In order to achieve seamless handover with IP address preservation, embodiments add a new Network Element or Function directly interconnecting the 3GPP and the non-3GPP network, but not conveying the User Plane data traffic to/from the UE. This new Network Element or Functional Entity is named the Hand-Over Controller or Seamless Hand-Over Controller (SHOC). The SHOC only handles Control Plane traffic, which is a major benefit compared to all previously known solutions for IP address preservation, in which the impacted network elements (HA, R12 eSAMOG TWAG, eSAMOG PGW, PGW with Hybrid Access...) are used for routing/forwarding the User Plane traffic as well.

In summary, a new Control Plane element is provided that is able to let the UE remain REGISTERED in the MME or SGSN, while the UE is being serviced by a non-3GPP Trusted Wireless/Wired Access Network (TWAN) and/or a non-3GPP Untrusted Wireless/Wired Access Network (UWAN via ePDG). This has the benefit that the UE remains reachable for paging; CSFB and SMS remain possible even on Pre-R11 MMEs; and SGSN, MME or SGW relocations are tracked.

Furthermore, when TWAN/UWAN connectivity is lost, downlink GTP-U packets can be forwarded to the latest SGW, SGSN or RNC instead. SGW, MME, SGSN and RNC relocations can be tracked, and when TWAN connectivity is lost, the UE can be paged on the E-UTRAN/ UTRAN/ GERAN side and downlink GTP-U connectivity to the E-UTRAN, UTRAN or GERAN can be restored. when Trusted Access Network or Untrusted Access Network connectivity are interrupted.

Embodiments allow 3GPP-to-non-3GPP and non-3GPP to non-3GPP handovers preserving the UE's IP address(es) (IPv4 and/or IPv6 address) and eliminating or at least reducing packet loss during the transition. Embodiments allow visited Mobile and Fixed Broadband Providers to roll out consistent services across 3GPP and non-3GPP networks, across licensed and unlicensed spectrum, without having to worry about the impact on their mobility anchors (PGW, HA) nor on foreign home networks (for inbound roamers visiting their 3GPP and non-3GPP networks). Embodiments allow an intermediate organization to provide the seamless handover service between multiple visited network, for subscribers coming from multiple home networks.

The SHOC is applicable to the case where the UE (e.g. a business CPE or an in-car CPE) is switching between 3GPP (e.g. LTE) and any non-3GPP access network or access technology, not only wireless (i.e. Wi-Fi) but also fixed Broadband (DSL, DOCSIS, GPON and other) and also between different non-3GPP access networks.

Previously known techniques for seamless handover with IP address preservation include standard and non-standard techniques all impact the home networks, i.e. address preservation could not be introduced by a visited 3GPP and non-3GPP network without dependency on the 3GPP home network (PGW) or IETF home network (HA). The SHOC enables the tandem of a visited 3GPP network and a visited non-3GPP network, or any intermediate organization only handling control plane traffic, to introduce seamless handover with IP address preservation for any UE of any home network - including its own UEs of course.

Another important industry challenge is to achieve seamless handover with IP address preservation for 3GPP Pre-Release 12 UE and business CPEs and other products using a combination of 3G/LTE and fixed backhaul today. The previously known Pre-R12 techniques relied either on IETF MIP clients and Home Agents (HA, the overlay model) or on adaptations within the 3GPP PDN Gateway (PGW). The SHOC achieves this without any adaptation to the PGW and without requiring a HA.

3GPP's standard for clientless, seamless handover with IP preservation is Release 12 eSAMOG, wich introduces a dependency on the authentication method in the non-3GPP network (namely 3GPP Release 12 EAP-AKA') at a moment where SIM-based authentication is not common (i.e. Apple devices assume EAP-PEAP by default when accessing 802.1x EAP-enabled Wi-Fi networks) and where supported, is merely relying on the EAP-SIM and EAP-AKA methods. The SHOC does not introduce such dependency.

The SHOC has great potential for new use cases and applications not supported by the previously known techniques, e.g. mobile roamers can now benefit from seamless 3G-to-WLAN handover within a visited country implementing SHOC, regardless of their home network. VoIP users can seamlessly hand over ongoing calls and video sessions to Wi-Fi, regardless of their home network. IPTV streamers can keep streaming content while the viewers (smartphones, phablets, tablets, smart TVs) are moving between 3GPP/3GPP2 and non-3GPP access. Vehicles can switch from LTE backhaul to Wi-Fi backhaul when arriving home, near buildings, or driving on highways equipped with Wi-Fi access points, thereby saving on macro LTE capacity.

The fact that the SHOC only relies on control plane traffic is also a benefit, considering the trend towards virtualisation : Virtual Machines will initially offer relatively limited throughput, and as such network functions relying only on control plane traffic are easier to deploy and more likely to be adopted in central data centers and/ or on distributed generic x86 computing platforms.

All previously known solutions for seamless 3GPP-to-non-3GPP handover, either client-based or client-less, either standard or proprietary, impacted the Home Network, namely the network element assigning the IP address to the UEs and anchoring the UEs for mobility (EPS/ SAE PGW/GGSN or MIP HA).

For example introducing standard 3GPP Release 12 eSAMOG impacts the UE, TWAG and the PGW. Indeed the PGW has to delay the deletion of the EPS LTE bearers until the TWAG signals that the WLAN connection (DHCP DORA procedure) has succeeded. The same is true for the 3GPP S2b model with ePDG, where introducing seamless handover (= with IP address preservation) would require similar new behaviour to be introduced on the PGW.

The SHOC can also operate where hybrid access is available at the PGW (=simultaneously active S2a and S5 sessions, or S2a+S8, or S2b+S5, or S2b+S8, or S2a + S2b, multiple S2a sessions, multiple S2b sessions, or combinations thereof). The technique supports Pre-R12 UE and other EAP methods than EAP-AKA'. Obviously the PGW then has to behave differently for users of eSAMOG versus Hybrid Access to the PDN.

Home Network Transfer (HNT) can be introduced on the PGW, a technique deleting the S5/S8 session before the S2a/S2b session has been successfully set up, and transferring the IP address(es) to the S2a/S2b session. HNT also supports Pre-R12 UE and other EAP methods than EAP-AKA'. HNT impacts the PGW and/or the 3GPP AAA with which the PGW communicates. And again, the PGW would need to differentiate its behaviour for HNT versus eSAMOG versus Hybrid Access users.

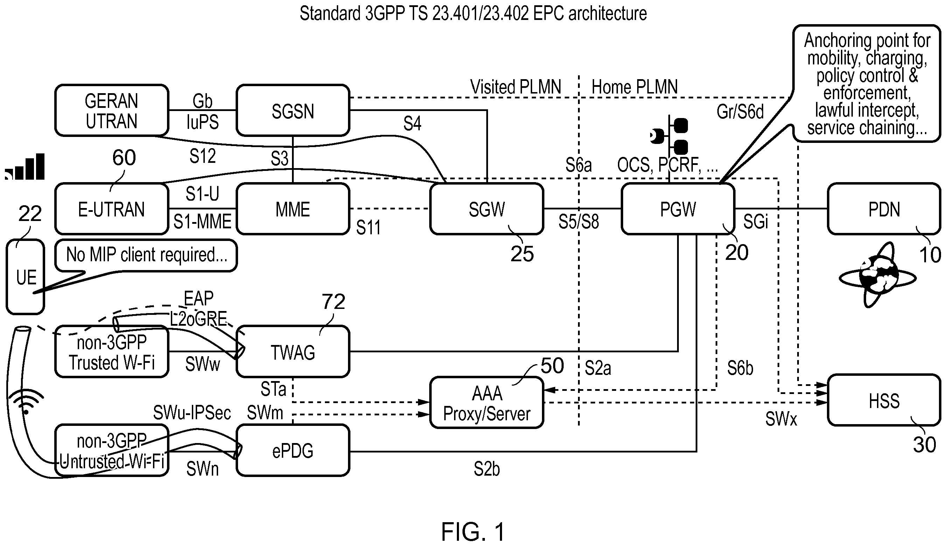

Figure 1 schematically shows different access networks that may be available to a user equipment 22 for accessing a Packet Data Network (PDN) 10. The user equipment may connect using one or several of these four different access technologies depending on its location, settings, applications in use, quality of service and other factors. The different access networks provide access to the PDN via a packet data network 10 gateway PGW 20. PGW 20 may have multiple access point names APNs that provide interconnections with different properties to the PDN 10.

A summary of the different possible non-cellular access connections that are shown is given below.

Trusted non-3GPP access, i.e. over an access network owned/operated by the same organization as the one owning or operating the EPC (evolved packet core), or by an organization with which the EPC operator has a formal roaming agreement. The controlling element is the Trusted WLAN Access Gateway (TWAG) which appeared in the 3GPP Release 11 standards. Following EAP authentication, the UE sets up a DHCP or PPP session to the TWAG, and all Layer 2 traffic is relayed over a GRE, L2TPv3 or PPP tunnel between the AP (access point) and the TWAG.

Untrusted non-3GPP access occurs over access networks operated/owned by different organizations to the one owning or operating the EPC, and it has an evolved Packet Data Gateway (ePDG) as the controlling element. The UE sets up an IPSec tunnel (IKE session + ESP SA) directly to the ePDG, which authenticates the UE via EAP-AKA' or EAP-TLS.

By adding the TWAG, ePDG and AAA (authentication authorization and accounting) proxy server, the EPC was expanded to become what is today commonly called the IP Mobile Core (IPMC).

The TWAG and ePDG can both connect authenticated Wi-Fi UE to the Packet Data Network Gateway (PGW), Gateway GPRS Support Node (GGSN) or combined PGW/GGSN via the S2a resp. S2b reference points. The protocol can be either PMIP, GTPv1 or GTPv2. But this is not mandatory : in Local Break-Out (LBO) mode, the TWAG and ePDG connect the UE directly to the PDN (Packet Data Network). The AAA server can instructs the TWAG and ePDG which profile and mode to apply for each individual UE session, which APN to select, which PGW instance etc.

There are two different types of cellular access technologies shown which provide access via a serving gateway SGW 25 to the PGW 20. Depending on its location, the UE may connect to either of the cellular or the non-cellular access networks; the control signals requesting a connection will be transmitted via the IP connectivity access network gateways (TWAG, ePDG) to the PGW and access connections to this PGW will be set up allowing the PGW 20 to provide data transfer between the UE 22 and the PDN 10.

There is also home subscriber server HSS 30 shown which stores information about the user equipment which is used for access and charging and this communicates with the authentication authorisation and accounting AAA proxy or server 50. This is also accessed by the devices controlling the access connections in the non-3GPP systems allowing them to determine whether access should be allowed or not.

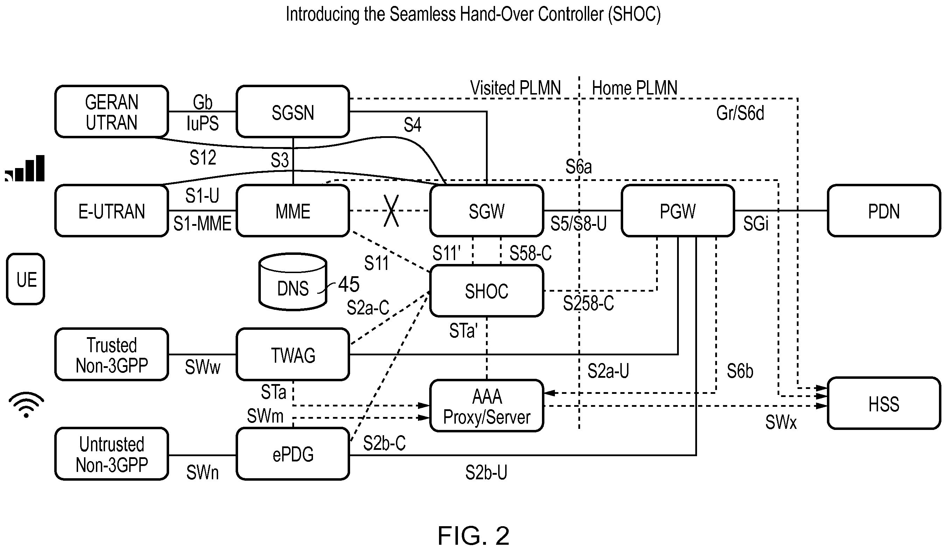

Figure 2 shows a similar system to that of Figure 1 but with an additional device, the seamless handover controller SHOC 40 according to an embodiment.

The SHOC 40 is a new Network Element or Function directly interconnecting 3GPP to non-3GPP networks only via the Control Plane. The SHOC is inserted as a GTP-C proxy on the S11 reference point (MME-SHOC), thereby introducing the S11' reference point (SHOC-SGW); on the S2a reference point, thereby introducing the S2a-C reference point (TWAG-SHOC); on the S2b reference point, thereby introducing the S2b-C reference point (ePDG-SHOC); on the S5 and S8 reference points, thereby introducing the S58-C reference point (SGW-SHOC). The aggregated control plane traffic towards the PGW is now conveyed on a new S258-C reference point (SHOC-PGW). Finally, the STa' reference point is introduced between the SHOC and the 3GPP AAA Proxy. It allows the SHOC a.o. to retrieve the provisioned PGW address from the HSS when the UE is not EPS-attached (not EMM/ESM active), the parameters of the EPS context when the UE is EPS-attached, the stored SGW IP address and TEIDs (tunnel endpoint identifiers).

The vertical dashed line on the diagram represents the logical boundary between visited and home network, and the SHOC is applicable regardless of whether these are from separate organizations or not.

The SHOC intercepts access connection requests in the control plane transmitted within the different access networks and amends them prior to sending them to the PGW 20. In this regard, it should be noted that amending devices on the visited side of the PLMN (Public LAN Mobile Network) is more acceptable than amending them on the home side where access to the packet data network is controlled and where charging, policy control and lawful interception enforcement are implemented.

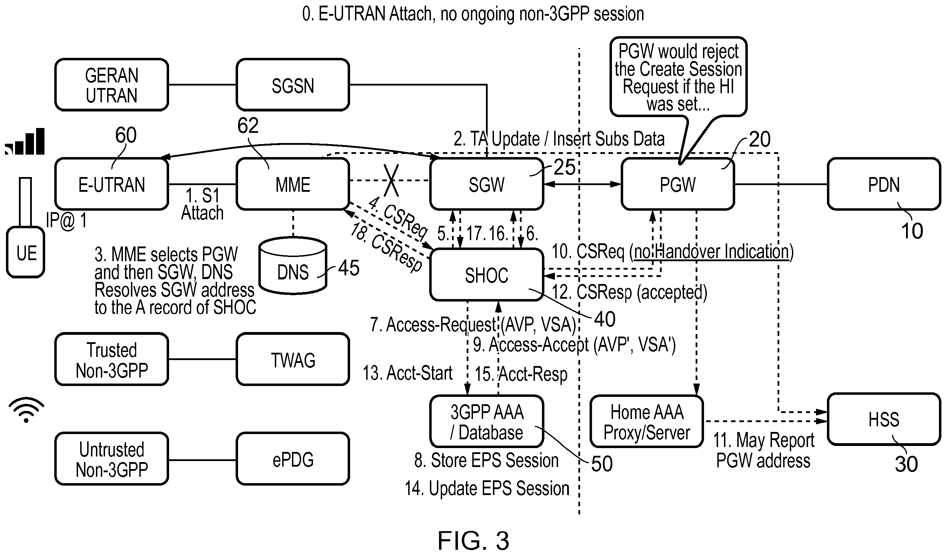

The basic operation of the SHOC is represented in Figures 3 to 17 (message flows) following the architectural diagram. The message flows are meant to illustrate the main concept and not intended to be exhaustive.

In this regard, Figure 3 shows the UE 22 initially connecting to the PDN 10 via an evolved universal terrestrial radio access network E-UTRAN base station 60. An S1 attach signal is transmitted by the E-UTRAN 60 to the MME (Mobility Management Entity) 62. The MME 62 contacts the domain name server DNS 45 which stores mappings of access point name APN which are present in the attach signal and indicate the access connection required to IP addresses. In this case rather than sending the IP address of the SGW 25, the DNS transmits an alternative mapping such that the IP address of the SHOC 40 is provided. Thus, the usual route between the MME 62 and the SGW 25 is broken and control signals are routed via the SHOC 40 which itself transmits back responses to the MME 60 and communicates with the SGW 25 to which the data connection from the base station 60 is directed, this data pathway being unaffected by the diversion of the control signals.

MME 60 therefore transmits a create session request to SHOC 40 which transmits this information to the SGW which responds, transmitting information regarding the session to the SGW enables it to create a data pathway with the base station 60. SHOC 40 will transmit an access request of the AAA server 50 which will respond with authentication information indicating whether such an access request is allowed, if there is an existing connection between the UE 22 and the PDN 10 it will also transmit this at this point. AAA server 50 will store information about this EPS (evolved packet system) session. The create session request is then transmitted from the SHOC 40 to the PGW 20 which responds whereupon this information is transmitted to the AAA such that the stored EPS session information can be updated and the information is also transmitted to the SGW 25 and back to the MME 62.

The data pathway can be made between the base station 60 and the SGW 25 which will form a data pathway on to the PGW 20. The MME 62 also transmits information to the home subscriber server 30 and the PGW 20 will transmit information to the home AAA server such that these devices are kept up to date with the UE's location. In this way, the UE connects to the packet data network via a LTE access technology and information regarding the session is stored at the AAA 50.

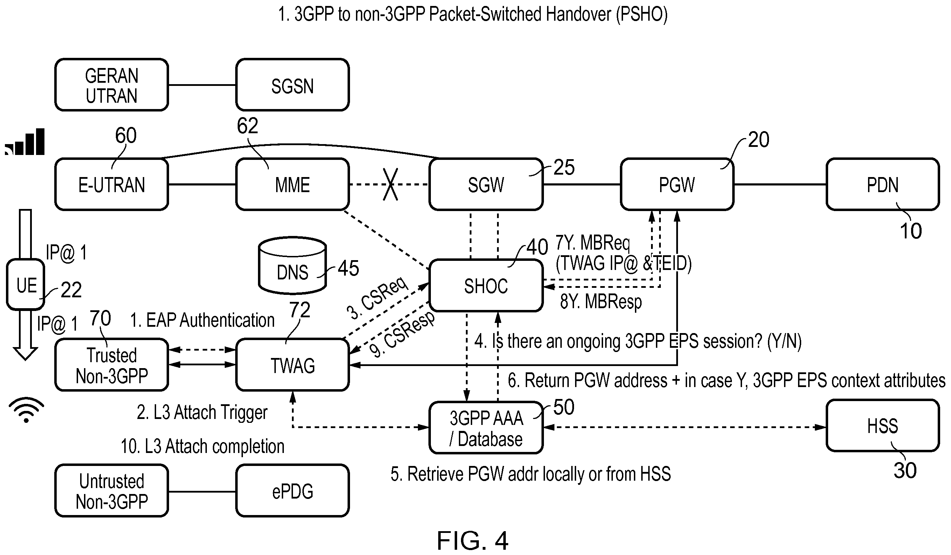

Figure 4 schematically shows steps performed when the UE currently connected to the PDN 20 via the base station 60 detects a trusted Wi-Fi access node 70 and requests attachment to this. Initially, an EAP (Extensible Authentication Protocol) authentication is performed between the trusted Wi-Fi access node 70 and the trusted Wi-Fi access gateway TWAG 72 which accesses the AAA server 50 to determine whether or not the UE is authorised to attach to the trusted Wi-Fi. If it is, then an attach trigger is generated and a session request is transmitted from TWAG 72. This is diverted by mapping information stored in the DNS 45 to the SHOC 40.

Thus, SHOC 40 receives the session request from TWAG and in response to this it accesses the AAA server 50 to determine whether the UE has an ongoing access connection to the PDN 10. In this case, it has a current 3GPP session and thus, the information that there is such a session is returned along with the address of the PGW to which this access connection is routed. The address of the PGW may have been stored locally within the AAA or it may be retrieved from the home subscriber's server (HSS) 30. This information allows the SHOC 40 to amend the create session request to a modify or update bearer request which it then transmits to the packet gateway 20. In this regard, a create session request would destroy the 3GPP session and if this session is cut, then problems may arise with the UE attempting to reconnect to the cellular network resulting in possibly a ping pong of access connections. Transmitting a modified bearer request allows the PGW 20 to update its access connection to go via TWAG 72, rather than via the SGW 25. However, the previous session is not destroyed and although the radio bearer for the data plane may lapse, the UE context is still stored and the 3GPP access network is unaware of the new access connection and the UE is still connected to this network such that it does not try to reconnect.

The new access connection is set up to use the same IP address for the UE as was used for the 3GPP connection. This is done by the PGW 20 in response to the modify bearer request and it supplies the SHOC 40 with the IP address for the UE. This allows any applications being run on the UE to continue running, the data simply being sent via the new access connection. The PGW 20 updates its access connection to include the TWAG IP address and a new tunnel endpoint identifier TEID is being stored for this access connection. The SHOC 40 then responds to the TWAG 72 indicating that the session has been set up. The data can then be transmitted via the WLAN or Wi-Fi network rather than via the LTE network.

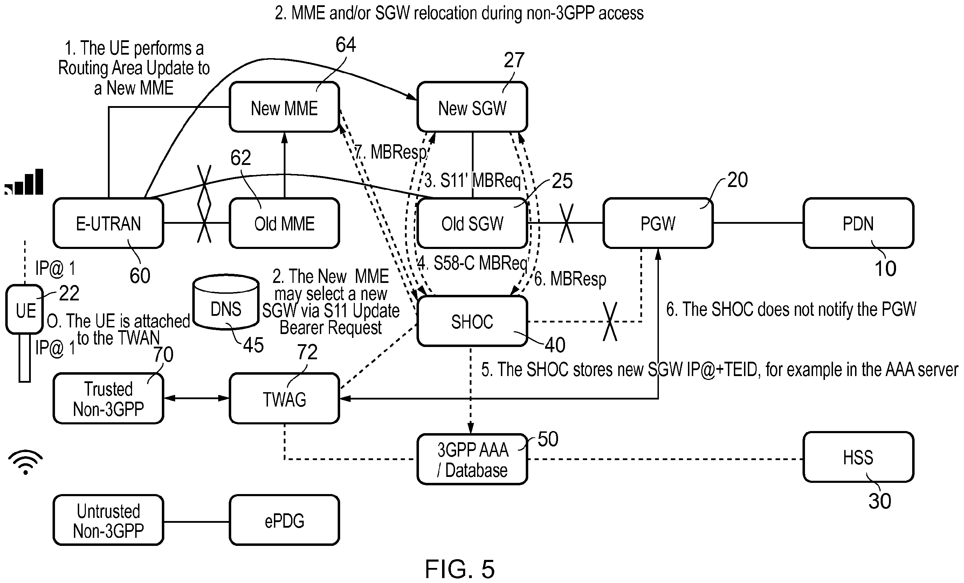

Figure 5 shows steps that occur according to an embodiment when the UE remains connected to the trusted Wi-Fi connection but moves between cells in the cellular network. In this case, although there is no data pathway between the base station 60 and SGW 25, the UE is still connected to the LTE network and will transmit routing area update signals when it moves to a cell whose base station is controlled by a different MME 64. The new MME 64 may use a new serving gateway 27 and this will be indicated using a S11 update bearer request. As cellular networks are designed to enable the seamless transfer of connections between base stations, the former MME 62 will transmit context information to the new MME 64 for this UE session. This context information includes the address of the SHOC 40 in place of the address of the SGW 25. Thus, the SHOC 40 will receive control plane messages including the update information from MME 64 which includes the IP address of the new SGW 27. SHOC 40 will store the new IP address of SGW 27 along with the TEID for the access connection. This may be stored locally or it may be stored in the AAA server 50. The storing of this information is important as when the UE eventually leaves the WLAN network and wishes to reconnect to the cellular network, then it is important that this information is can be retrieved. Furthermore, by allowing updates such as this the user equipment can be reached by paging messages from the cellular network while it has no data pathway with this network.

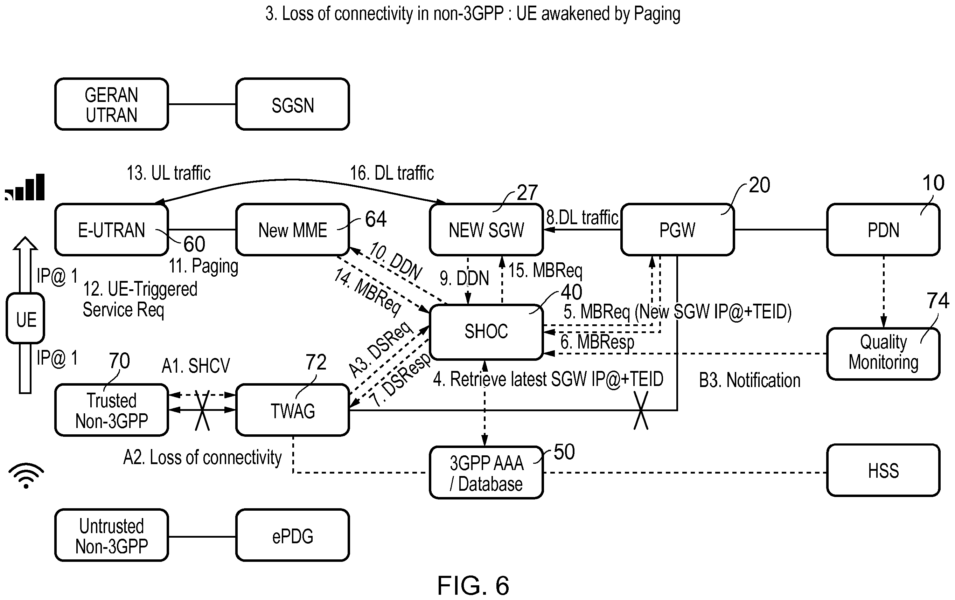

Figure 6 shows steps which occur when the UE moves from the trusted Wi-Fi access network back to the cellular network due to lack of connectivity. This may occur in response to there being a loss of connectivity between the access network node 70 and the gateway 72, or it may be due to a quality monitoring system 74 detecting the quality of the data connection between the TWAG 72 and the PGW 20 and configured to transmit signals to SHOC 40 notifying that the session should be deleted.

Thus, a delete session request is transmitted either from TWAG 72 and diverted to the SHOC 40 or from the quality monitoring system 74. SHOC 40 accesses AAA server 50 to look up the IP address for the latest serving gateway and the TEID for the connection and transmits a modify bearer request with this information to the PGW 20. The PGW 20 responds to the SHOC 40 and in addition sends downlink traffic to the IP address of the new serving gateway 27.

The new serving gateway 27 does not know which base station the UE is connected to and it will therefore send a DDN (Downlink Data Notification) message to the SHOC 40. This will forward this to the new MME 64 which will locate the base station by transmitting paging information. In this regard, it may page all base stations under its control or it may page a subset where it believes the UE is most likely to be and if it receives no response, it may then page further base stations. Once the MME has received a response from a base station, MME 64 will transmit a modify bearer request to SHOC 40 from which it received the DDN signal. SHOC 40 forwards this request to the new SGW 27 which can then establish an access connection for data traffic between itself and the base station 60 in whose cell the UE is currently located. In this way the dormant access connection between the UE and the PGW 20 via the LTE network is re-activated. SHOC 40 also transmits a delete session response to TWAG 72 allowing the session at the TWAG to be deleted.

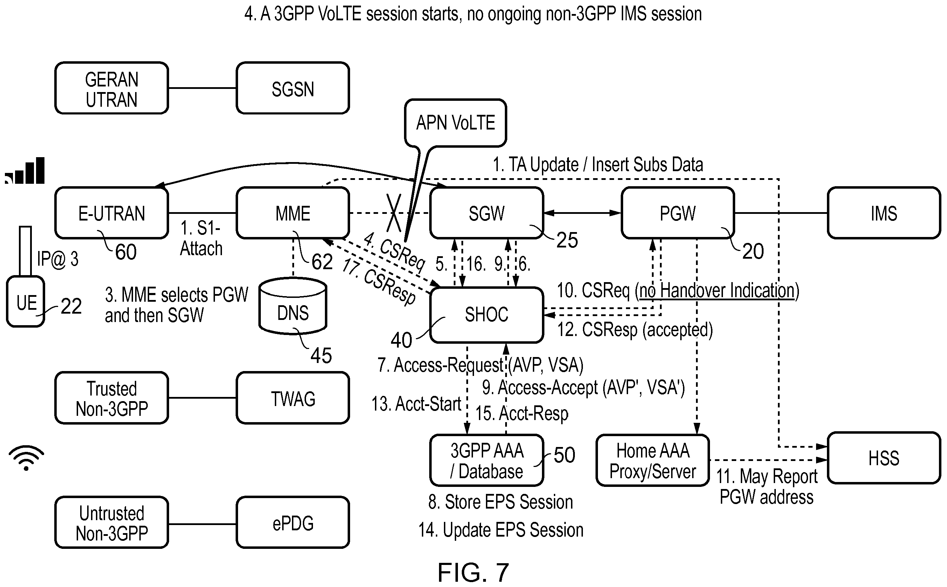

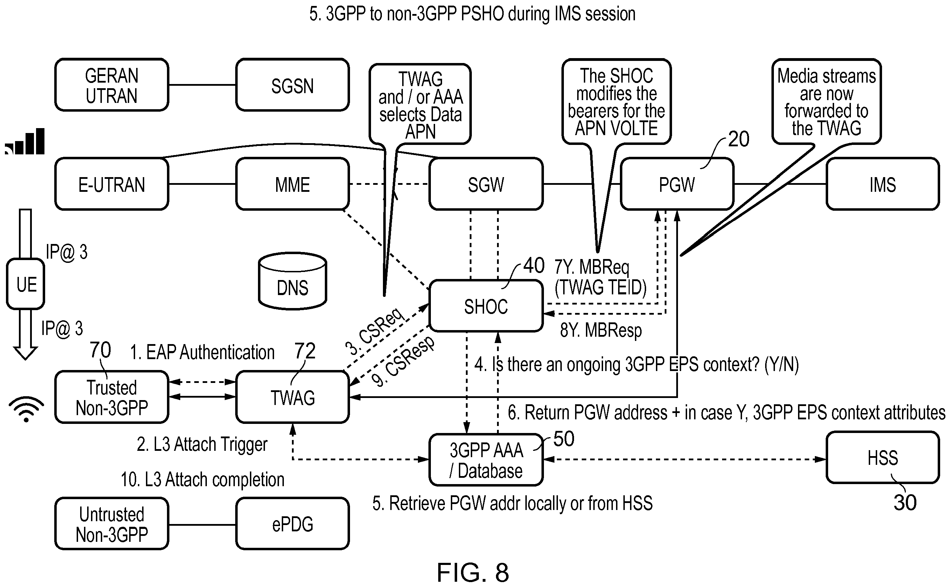

Further examples of the use of the handover controller SHOC 40 in are provided with respect to Figures 7 and 8.

Figure 7 shows message flows that occur when a user equipment wishes to initiate a voice over LTE (VoLTE) session according to an embodiment. User equipment 22 signals to base station 60 that it wishes to attach to the network and an S1 attach signal is sent from the base station 60 to the MME 62. In response to this signal, MME 62 will access the domain name server DNS 45 and will in conjunction with this select the SGW and the PGW. The domain name server 45 has in this embodiment stored the address of the SHOC 40 in place of the SGW address such that the session request requesting this VoLTE session is transmitted to the SHOC 40 instead of the SGW 25.

SHOC 40 accesses AAA server 50 in response to the session request and AAA stores the EPS session and indicates if the session is accepted or refused. If the session is allowed, the session request is forwarded to the PGW 20 which responds with information for the session. SHOC 40 responds to this by transmitting the information to the AAA server 50 which stores the updated session information and acknowledges. The PGW 20 also transmits information regarding the session to the home authorisation server which will report the address of the PGW to the home subscription service. On receipt at the SHOC 40 of the information that the session has been accepted, this information will be returned to the MME 62. A VoLTE session can then commence between the base station and the serving gateway 25 and then on to the packet gateway and information regarding this is stored in the authorisation server 50.

Figure 8 shows what happens when the UE connects to a trusted WLAN network during a VoLTE session. An EAP authentication is sent to the trusted WLAN gateway TWAG 72 and a session request is again diverted to SHOC 40. The SHOC then access the AAA and determines whether there is an ongoing cellular access connection. The AAA 50 returns the PGW 20 address for this request and in the case that there is an ongoing cellular connection the 3GPP EPS context parameters. The SHOC 40 then amends the request to a modified bearer request for an access point node for VoLTE and transmits this along with the address for the TWAG and the TEID for the new access connection. In response to this, the PGW will then forward the media stream to the TWAG 72 that it has received the address of and will respond to the SHOC to this effect. The SHOC transmit this response to the TWAG 72. A signal is then sent indicating that the attach is complete and the voice over IP transmission is now sent via the WLAN network rather than the cellular network. However, the cellular network connection is not deleted but remains present such that tracking area updates are still transmitted by the user equipment. Furthermore, the IP addresses used by the user equipment for other PDN connections have remained the same and thus, any other applications using these other PDN connections will not have been affected. As the connection via the cellular network to the PDN containing the IMS has not been deleted, the user equipment will not try to reconnect and no ping ponging of connections will occur.

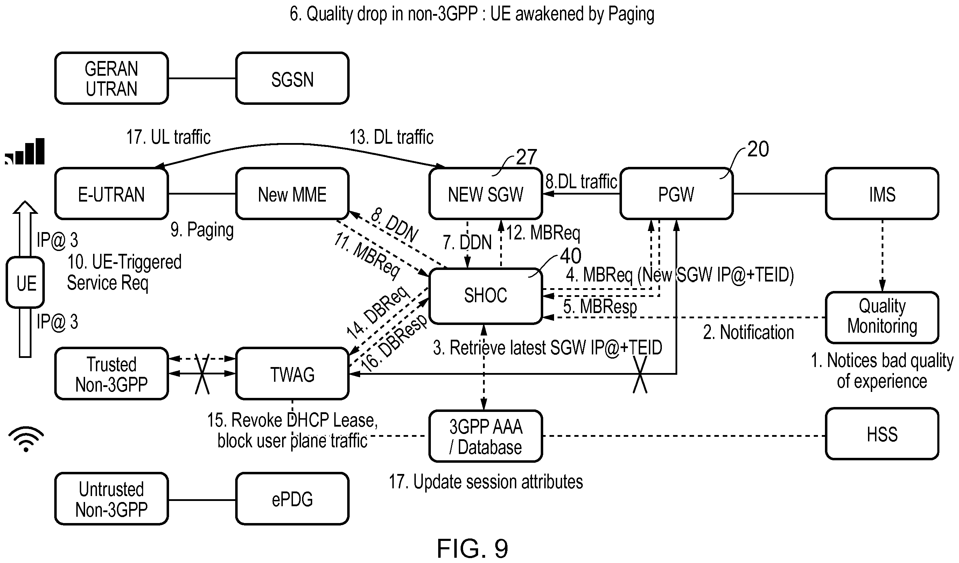

Figure 9 shows steps performed in a method when a quality drop is measured for traffic using the access connection to a trusted WLAN network during an IMS session. The quality monitor transmits a notification to the SHOC indicating that it has detected that the quality of the IMS session via the TWAG connection has fallen below a threshold.

The SHOC will retrieve the latest information from the AAA database regarding the location of the UE in the cellular network and in particular, the most recent SGW and MME for the UE. It will inform the PGW of the new SGW and the TEID of the UE and the PGW will divert downlink traffic to the new SGW rather than to the TWAG. The new SGW will transmit a DDN (downlink data notification) signal to the SHOC which will forward it to the MME for the UE, which will then transmit paging signals to its base stations to locate the actual cell the UE is located in. When the UE receives the paging signal it executes the UE-triggered service request procedure. The MME, SHOC and SGW are then informed of the base station where the UE is located, and the SGW can start transmitting downlink user plane data to the UE via the correct base station. The SHOC will transmit a delete bearer request to the TWAG such that the UE can no longer transmit uplink traffic via the TWAG but is forced to use the cellular network (the base station). The TWAG will transmit update information to the AAA such that the session attributes for the UE are updated at the AAA.

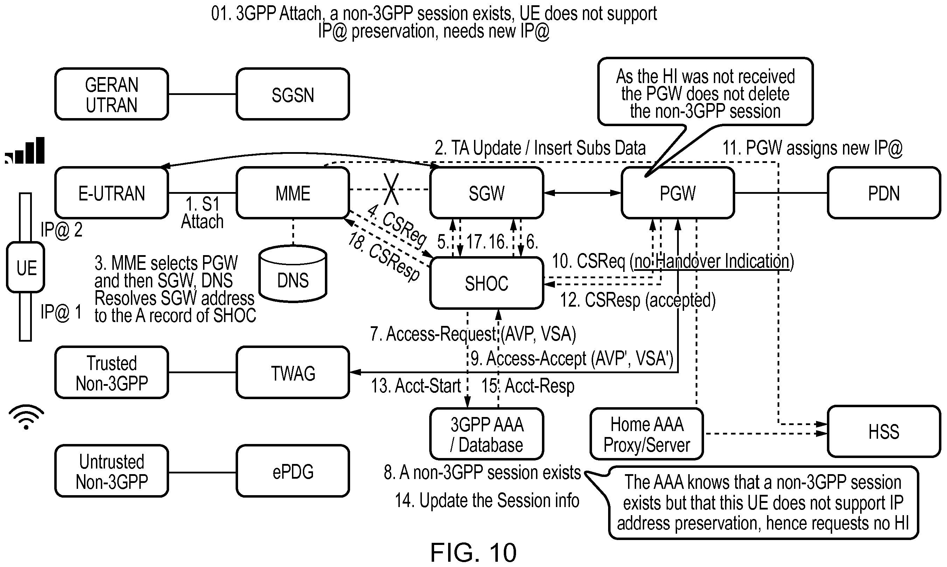

Figure 10 shows steps performed when a user equipment attaches to a LTE network and a non-3GPP access connection already exists, in a case where the user equipment does not support IP address preservation between both access networks. In this case the UE may be a personal computer (DTE : Data Terminal Equipment) with an LTE modem (DCE : Data Communication Equipment). Such UE do not support IP address preservation. Thus, when the LTE modem attaches to an LTE network and there is an existing connection to a Wi-Fi network, a new IP address is required for this new connection as the computer will not support IP address preservation and the system would crash if the same IP address was assigned on the LTE side as on the Wi-Fi side. This scenario is again managed by the SHOC, with the MME diverting the create session request to the SHOC, the DNS being configured to resolve the SGW address to that of the SHOC. On accessing the AAA database the SHOC recognises that a non-3GPP session exists and also that the UE does not support address preservation and thus, a create session request is transmitted to the PGW without a handover indication. The PGW responds to this by assigning a new IP address and does not delete the non-3GPP session. The PGW responds to the SHOC which updates the session information at the AAA and the UE will then have a connection to the cellular network and one to the Wi-Fi each connection using a different IP address.

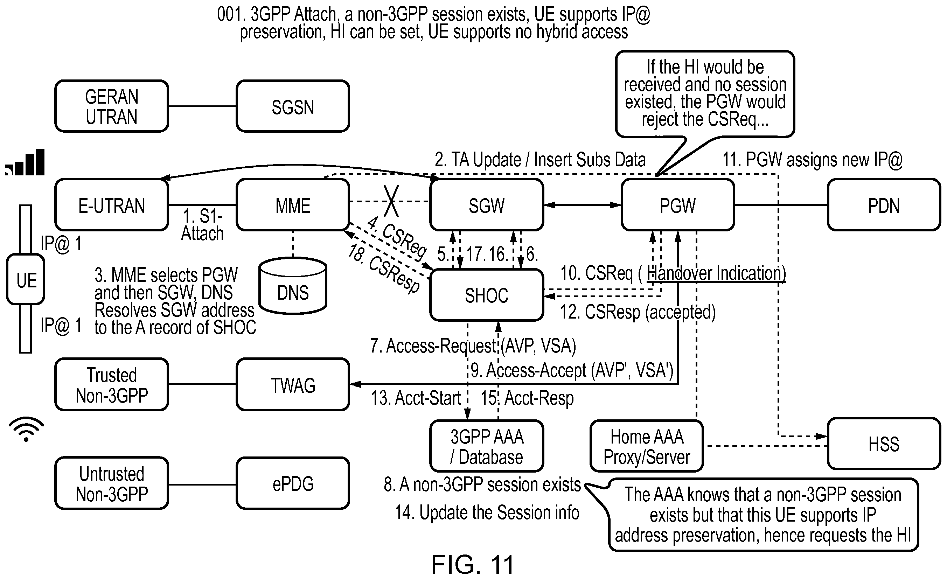

Figure 11 shows steps performed when a user equipment that does not support hybrid access attaches to a LTE network and a non-3GPP access connection already exists, in a case where the user equipment does support IP address preservation between both access networks. In this case the handover indication is set, so that a new connection with the same IP address is provided.

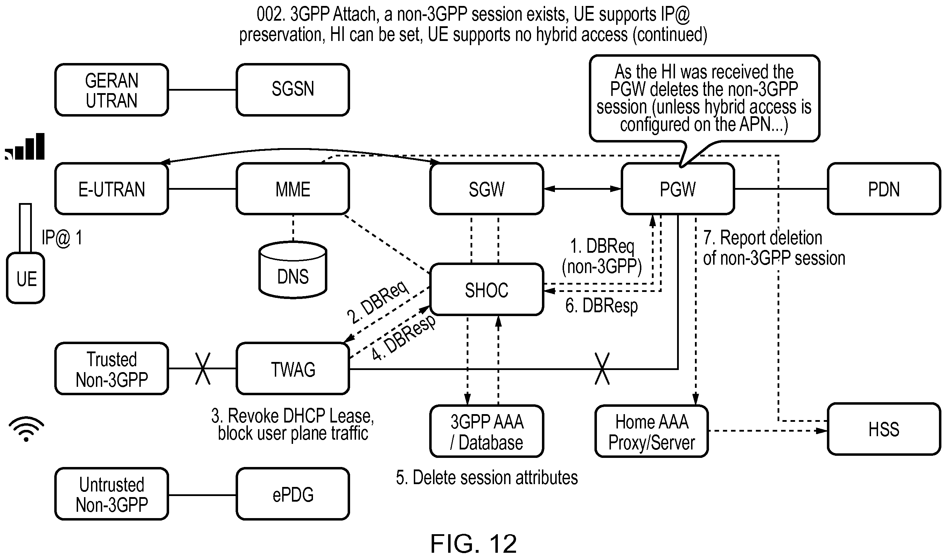

Figure 12 shows subsequent steps performed following those of figure 11 and here the Wi-Fi connection is deleted in response to the handover indicator and to the APN not supporting hybrid access.

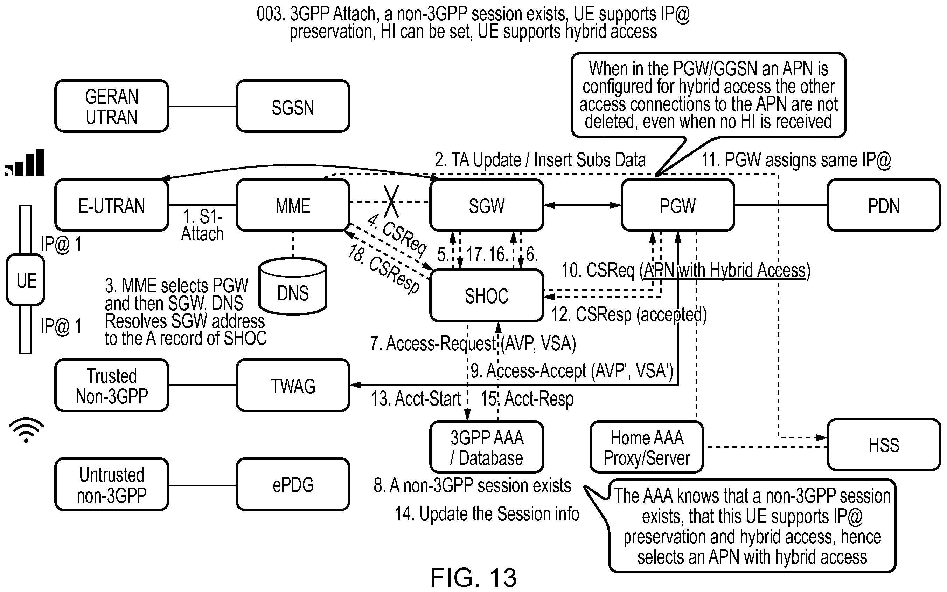

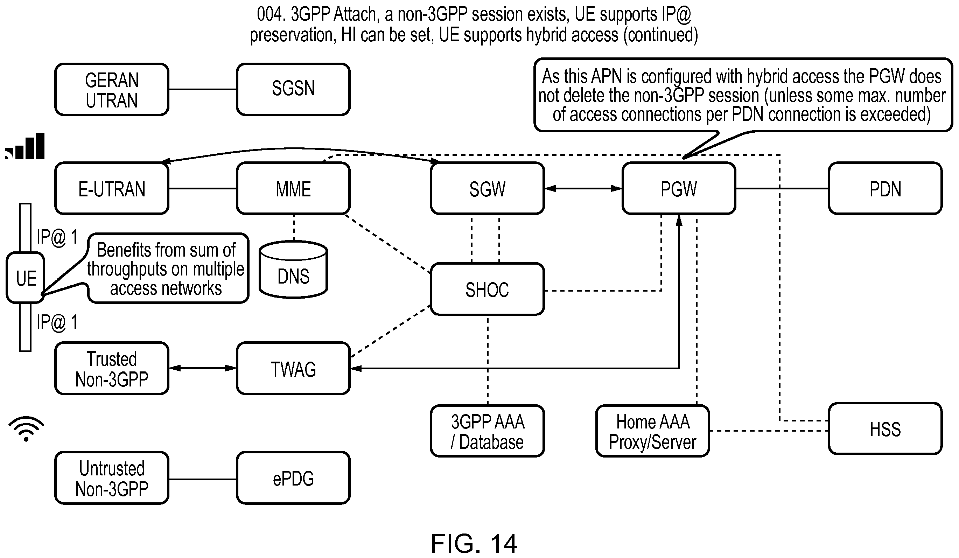

Figure 13 shows steps performed when a user equipment attaches to a LTE network and a non-3GPP access connection already exists, in a case where the user equipment supports IP address preservation between both access networks and the user equipment supports hybrid access. In this case the handover indicator is set and the session request is transmitted from the SHOC with an APN which supports hybrid access. The PGW responds to this by assigning an access connection to the UE via the cellular network with IP address preservation, and details of the new session are stored at the AAA. Figure 14 shows the subsequent steps performed following those of figure 13 where the Wi-Fi connection is maintained and the UE benefits from the sum of throughputs on both access connections.

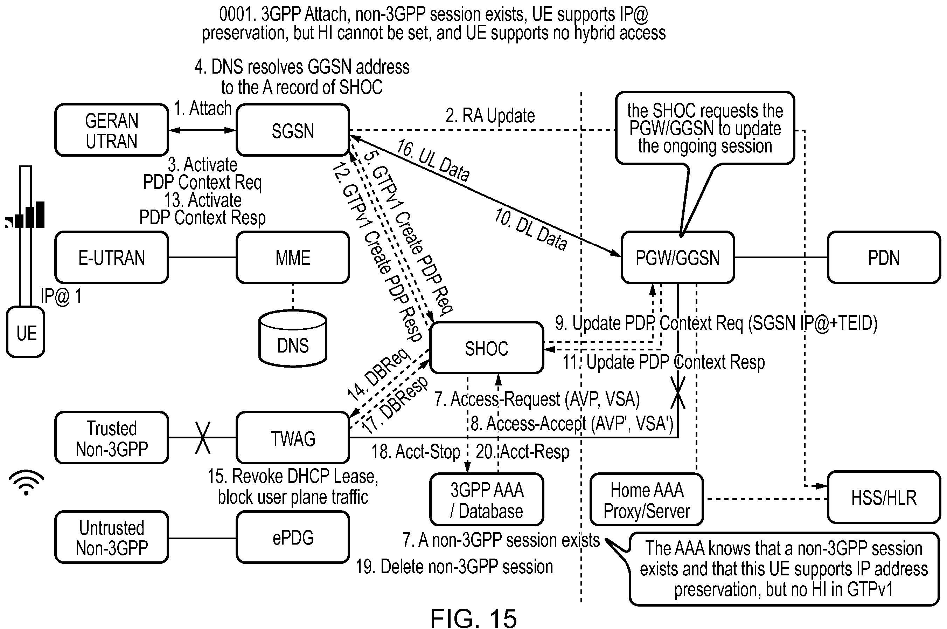

Figure 15 shows steps performed when a user equipment attaches to a 2G or 3G network and a non-3GPP access connection already exists, in a case where the user equipment supports IP address preservation between both access networks but does not support hybrid access. In this case the handover indication cannot be set as this signal is not supported in GTPv1, so the SHOC requests the PGW or GGSN to update the ongoing session and in step 10 downlink user plane data is diverted to the SGSN, following communication of the SGSN IP address and user plane TEID in step 9, the access connection via the TWAG is then deleted.

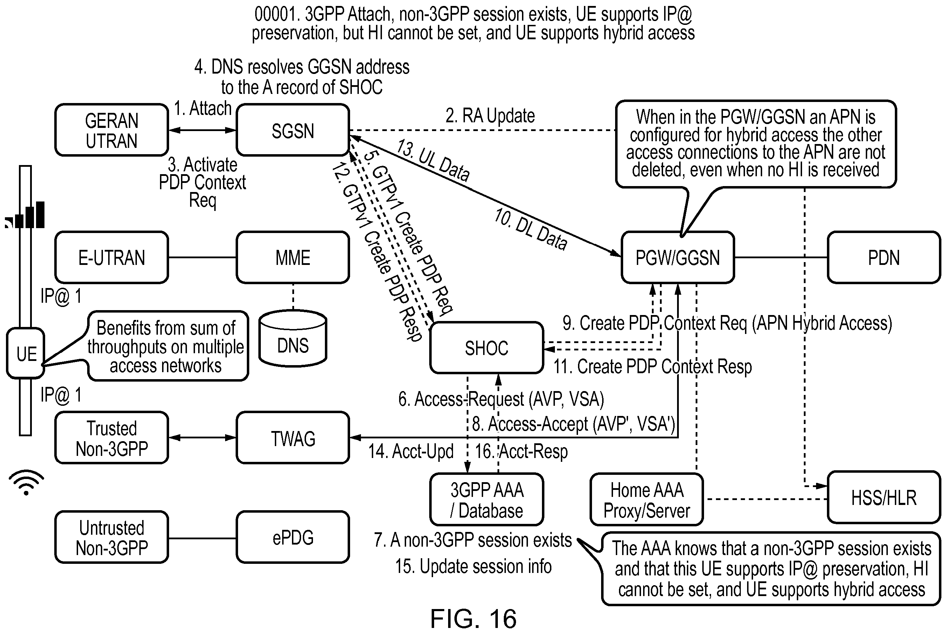

Figure 16 shows steps performed when a user equipment attaches to a 2G or 3G network and a non-3GPP access connection already exists, in a case where the user equipment supports IP address preservation between both access networks, the handover indication cannot be set and the user equipment does support hybrid access. In this case, the SHOC transmits a create PDP context with an APN that supports hybrid access to the PGW/ GGSN. This allows the new connection to be created without the Wi-Fi connection being deleted, allowing the UE to benefit from data traffic arriving via multiple access networks.

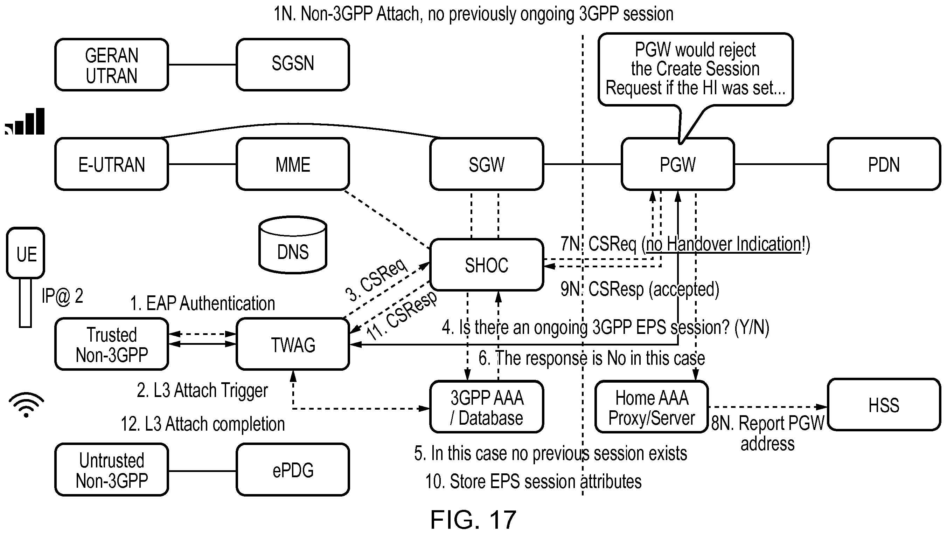

Figure 17 shows steps performed when a user equipment attaches to a non-3GPP access network such as Trusted WLAN and no other access connection exists. In this case the access connection is diverted to the SHOC, which access the AAA and determines that there is in fact no current session. Thus a session request without a handover indicator is transmitted and a session is set up and the session attributes are stored in the AAA.

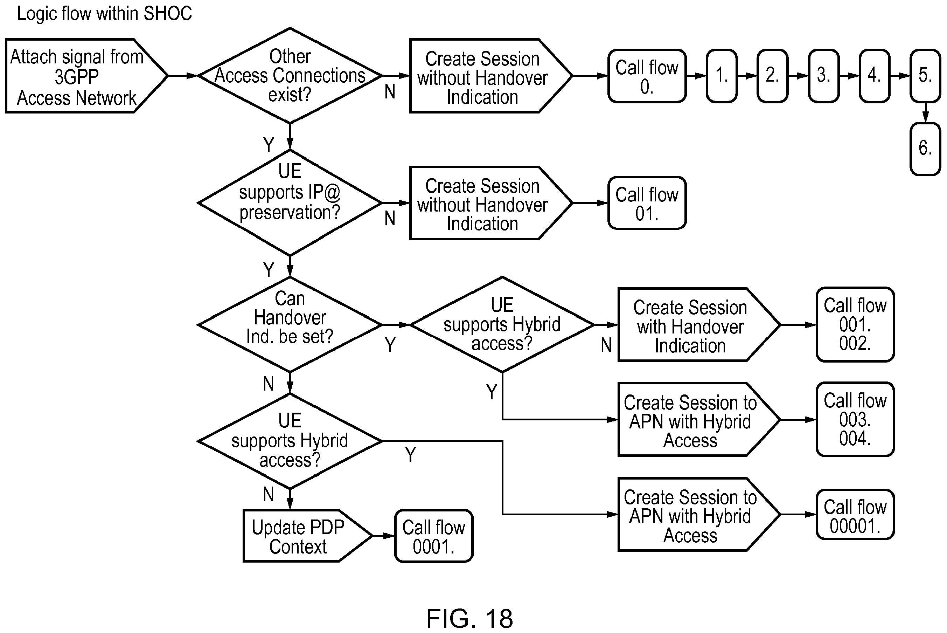

Figure 18 schematically provides a flow diagram illustrating steps in a method according to an embodiment. In this embodiment connection requests to a 3GPP access network are received and are diverted to a handover controller (the SHOC of Figures 2 to 17). The handover controller accesses an authorisation database (the AAA server of Figures 2 to 17) to determine if there is an existing connection for this UE. If not then the create session request is forwarded to the PGW and the handover indication is disabled as in Figure 3. However, if there is a connection then it is verified whether the user equipment supports IP address preservation. If not then the create session request is forwarded to the PGW and the handover indication is disabled as in Figure 10. If so then it is verified whether the S258 connection between SHOC and PGW supports the handover indication, and whether the user equipment, packet data network gateway and packet data network support hybrid access - the concurrent existence of multiple access connections. Depending on the outcome of these tests, the following control signals are transmitted to the PGW, either a create session request with handover indication as in Figure 11; or a create session request with an access point name supporting hybrid access as in Figures 13, 16; or a modify or update request as in Figure 4, 6, 8, 9 or 15.

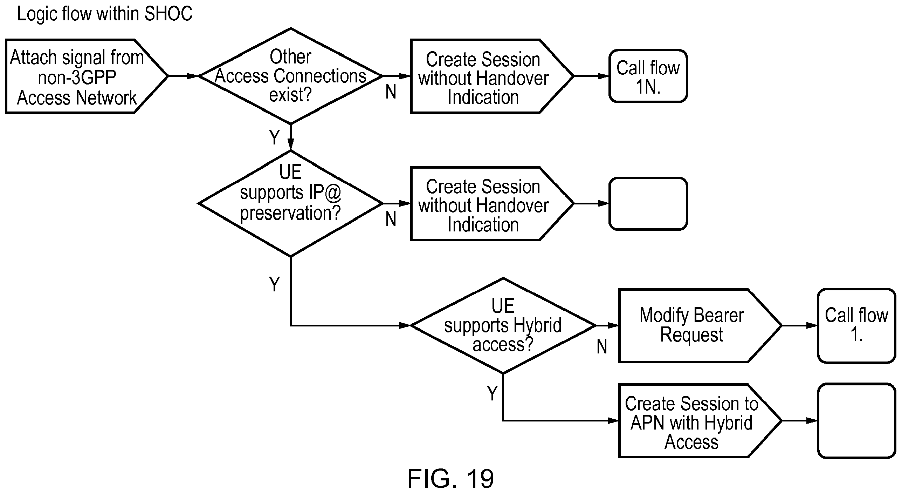

Figure 19 schematically provides a flow diagram illustrating steps in a method according to an embodiment. In this embodiment connection requests to a non-3GPP access network are received and are diverted to a handover controller (the SHOC of Figures 2 to 17). The handover controller accesses an authorisation database (the AAA server of Figures 2 to 17) to determine if there is an existing connection for this UE. If not then the create session request is forwarded to the PGW and the handover indication is disabled as in Figure 17. However, if there is a connection then it is verified whether the user equipment supports IP address preservation. If not a create session request is transmitted with handover indication. If so it is tested whether the user equipment, packet data network gateway and packet data network support hybrid access - the concurrent existence of multiple access connections. If not a modify or update request is sent as in Figure 4, 6, 8, 9 or 15; if so a create session request is sent towards a packet data network gateway and with an access point name supporting hybrid access as in Figures 13, 16.

In a system that may support hybrid access the steps performed are more complex. In such a case, if it is determined that there is an existing UE connection and that the UE can support hybrid access but that the PGW does not support it for the PDN then a session request is transmitted and the PGW responds to this by modifying or updating the existing access connection, or creating a new access connection and deleting the previous one such that a single data pathway exists for transmitting data from the same PDN to the UE.

In a system where the PGW does support hybrid access and where it is configured for hybrid access to the intended packet data network then the create session request is transmitted to an access point name which is known to be configured with hybrid access for allowing an additional access connection to be created with the same IP address or IP addresses for the UE as the existing access connection. As a result data can be transmitted to the UE along either pathway according to rules within the PGW and within the UE.

As noted above embodiments of the present invention can be used not only to achieve a switch between access network connections while retaining a UE IP address, but they can also be used to allow hybrid access for such technologies, the amendment of the control signals being used to select the correct behaviour depending on the properties of the UE and the PDN and/or PGW that is determined from accessing the authorization database.

A summary of some of the benefits of the handover controller (SHOC) according to embodiments are:
The SHOC does not eliminate the need for the 3GPP Release 11 TWAG or for the ePDG themselves, but it eliminates or reduces the need to introduce seamless handover logic (eSAMOG, Hybrid Access and/or Home Network Transfer) on the PGW/GGSN or HA, in order to obtain seamless handover with IP address preservation. In general the SHOC avoids impacting the home network when introducing seamless handover with IP address preservation.

The SHOC achieves seamless or near seamless handover with IP address preservation for Pre-Release 12 UE, thereby eliminating the need to introduce Hybrid Access, Home Network Transfer or other unknown techniques offering seamless handover with IP address preservation to Pre-R12 UE.

The SHOC supports seamless handover with IP address preservation regardless of the UE authentication method on the non-3GPP network. Even non-SIM-based authentication methods such as EAP-PEAP, EAP-TTLS and EAP-TLS are supported.

The SHOC may be configured to support Pre-Release12 TWAG, thereby eliminating the need to upgrade a R11 TWAG in order to offer seamless handover with IP address preservation

A SHOC with TWAG or ePDG together eliminate the need to introduce a Mobile IP Home Agent (HA).

Thanks to its unique position on the S258-C reference point, the SHOC can modify/ correct GTP-C signalling information elements thereby facilitating the introduction of international roaming for inbound roamers to visited 2G/3G/LTE and carrier Wi-Fi networks. For example, if a PGW or its northbound charging/policy systems do not support RAT-Type = WLAN, the SHOC would avoid reporting this value on the S258-C interface towards that particular PGW, even when the UE moves to trusted or untrusted WLAN.

The SHOC has the additional benefit of not depending on the SIM as the authentication mothod on WLAN and other non-3GPP networks. This allows a visited TWAN operator investing in a SHOC to offer EAP-PEAP access to inbound roamers (username = MSISDN, password = texted), while ensuring that they will obtain seamless handover with IP address preservation while moving to the local visited 3GPP networks.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method of amending signals in the control plane to facilitate data transfer between a user equipment and a packet data network via different access connections each using a different access network at least one being a non-cellular access network, said method comprising:
receiving a signal in the control plane requesting a change in an access connection to be used to transmit data between said packet data network and said user equipment;
in response to receiving said signal in the control plane requesting said change in said access connection accessing an authorisation database storing information regarding said user equipment; and
determining from information accessed in said authorisation database whether said user equipment has a current access connection to said packet data network; and
in response to determining that said user equipment does have said current access connection, amending said signal in the control plane to generate a modified signal in the control plane and transmitting said modified signal in said control plane to a packet data network gateway such that an access connection used to transmit data to said user equipment is changed.

2. A method according to claim 1, further comprising storing information regarding said access connection to be used to transmit said data.

3. A method according to any preceding claim, wherein said signal in said control plane is received from one of: a device measuring quality of said current access connection and an IP connectivity access network gateway.

4. A method according to any preceding claim wherein said step of amending said signal in said control plane comprises amending said control signal to request a creation of a new access connection with a same IP address for said user equipment as said current access connection.

5. A method according to claim 4, wherein said step of amending said signal in the control plane comprises amending said signal in the control plane such that said current access connection is rendered dormant, a dormant access connection being an access connection where an IP address is still assigned to said user equipment for said access connection but said access connection is not currently used for transmitting data.

6. A method according to any preceding claim, further comprising intercepting update signals indicating changes to a dormant access connection such that said update signals do not arrive at said packet data network gateway and storing said indicated changes, said dormant access connection being an access connection where an IP address is still assigned to said user equipment for said access connection but said access connection is not currently used for transmitting data.

7. A method according to claim 6, wherein in response to receiving a reactivation signal in the control plane to reactivate said dormant access connection, said reactivation signal in the control plane is amended to indicate at least some of said indicated changes.

8. A method according to any one of claims 1 to 3, wherein said step of determining, further comprises determining whether said user equipment supports hybrid data access and when so amending said signal in the control plane to create a new additional access connection.

9. A method according to claim 8, comprising in response to determining that said user equipment does support hybrid data access, further determining whether said packet data network gateway supports hybrid access to said packet data network and when not amending said signal in the control plane to create a new additional access connection using a different IP address for said user equipment to said existing access connection and when so amending said signal in the control plane to create a new additional access connection using a same IP address for said user equipment to said existing access connection.

10. A method according to any preceding claim, wherein said authorisation data base comprises further information about properties of said user equipment and properties of at least one of said packet data network gateway and said packet data network, and a subscription of said user equipment, wherein said amending of said signal in the control plane is performed in response to said further information.

11. A method according to any preceding claim, wherein said step of amending said signal in the control plane comprises amending said signal in the control plane to indicate attributes required for said access connection in dependence upon information retrieved from said authorisation data base.

12. A method according to any preceding claim, wherein said signal in the control plane requesting a change in said access connection comprises one of a request to establish a new access connection, a request to delete an existing access connection and a request to switch a user plane datapath from one access connection to another access connection.

13. A computer program which when executed on a data processing apparatus is operable to control said data processing apparatus to perform steps in a method according to any one of claims 1 to 12.

14. A handover controller (40) configured to amend signals in the control plane to facilitate data transfer between a user equipment (22) and a packet data network (10) via different access connections (27, 72) each using a different access network at least one being a non-cellular access network, said handover controller (40) comprising:
a receiver operable to receive a signal in the control plane requesting a change in an access connection to be used to transmit data between said packet data network and said user equipment;
accessing logic operable in response to said receiver receiving said signal in the control plane requesting said change in said access connection, to access an authorisation database (50) storing information regarding said user equipment; and
control logic operable to analyse information accessed in said authorisation database and determine whether said user equipment has a current access connection to said packet data network and in response to determining that said user equipment does have said current access connection to amend said signal in the control plane to generate a modified signal in the control plane; and
a transmitter operable to transmit said modified control signal to a packet data network gateway such that an access connection used to transmit data to said user equipment is changed.

## Patentansprüche

1. Verfahren zum Abändern von Signalen in der Steuerebene, um eine Datenübertragung zwischen einem Benutzergerät und einem Paketdatennetz über verschiedene Zugangsverbindungen zu ermöglichen, die jeweils ein anderes Zugangsnetz verwenden, wobei es sich bei mindestens einem um ein nichtzellulares Zugangsnetz handelt, wobei das Verfahren Folgendes umfasst:
Empfangen eines Signals in der Steuerebene, das eine Änderung einer Zugangsverbindung anfordert, die zum Übertragen von Daten zwischen dem Paketdatennetz und dem Benutzergerät zu verwenden ist;
als Reaktion auf das Empfangen des Signals in der Steuerebene, das die Änderung der Zugangsverbindung anfordert, Zugreifen auf eine Autorisierungsdatenbank, die Informationen bezüglich des Benutzergeräts speichert; und
Bestimmen, anhand von Informationen, auf die in der Autorisierungsdatenbank zugegriffen wird, ob das Benutzergerät eine derzeitige Zugangsverbindung zu dem Paketdatennetz aufweist; und
als Reaktion auf Bestimmen, dass das Benutzergerät die derzeitige Zugangsverbindung aufweist, Abändern des Signals in der Steuerebene, um ein modifiziertes Signal in der Steuerebene zu erzeugen, und Übertragen des modifizierten Signals in der Steuerebene an ein Paketdatennetz-Gateway, sodass eine zum Übertragen von Daten an das Benutzergerät verwendete Zugangsverbindung geändert wird.

2. Verfahren nach Anspruch 1, das ferner Speichern von Informationen bezüglich der zum Übertragen der Daten zu verwendenden Zugangsverbindung umfasst.

3. Verfahren nach einem vorhergehenden Anspruch, wobei das Signal in der Steuerebene von Folgendem empfangen wird: einer Vorrichtung, die eine Qualität der derzeitigen Zugangsverbindung misst, oder einem IP-Konnektivität-Zugangsnetz-Gateway.

4. Verfahren nach einem vorhergehenden Anspruch, wobei der Schritt des Abänderns des Signals in der Steuerebene dahingehendes Abändern des Steuersignals umfasst, eine Erstellung einer neuen Zugangsverbindung mit einer gleichen IP-Adresse für das Benutzergerät wie die derzeitige Zugangsverbindung anzufordern.

5. Verfahren nach Anspruch 4, wobei der Schritt des Abänderns des Signals in der Steuerebene derartiges Abändern des Signals in der Steuerebene umfasst, dass die derzeitige Zugangsverbindung in einen Ruhezustand versetzt wird, wobei eine im Ruhezustand befindliche Zugangsverbindung eine Zugangsverbindung ist, bei der dem Benutzergerät weiterhin eine IP-Adresse für die Zugangsverbindung zugewiesen ist, die Zugangsverbindung jedoch derzeit nicht zum Übertragen von Daten verwendet wird.

6. Verfahren nach einem vorhergehenden Anspruch, ferner umfassend Abfangen von Aktualisierungssignalen, die Änderungen an einer im Ruhezustand befindlichen Zugangsverbindung angeben, sodass die Aktualisierungssignale nicht an dem Paketdatennetz-Gateway ankommen, und Speichern der angegebenen Änderungen, wobei die im Ruhezustand befindliche Zugangsverbindung eine Zugangsverbindung ist, bei der dem Benutzergerät weiterhin eine IP-Adresse für die Zugangsverbindung zugewiesen ist, die Zugangsverbindung jedoch derzeit nicht zum Übertragen von Daten verwendet wird.

7. Verfahren nach Anspruch 6, wobei, als Reaktion auf Empfangen eines Reaktivierungssignals in der Steuerebene zum Reaktivieren der im Ruhezustand befindlichen Zugangsverbindung, das Reaktivierungssignal in der Steuerebene dahingehend abgeändert wird, zumindest einige der angegebenen Änderungen anzugeben.

8. Verfahren nach einem der Ansprüche 1 bis 3, wobei der Schritt des Bestimmens ferner Bestimmen, ob das Benutzergerät einen Hybriddatenzugang unterstützt, und, wenn dies der Fall ist, Abändern des Signals in der Steuerebene, um eine neue zusätzliche Zugangsverbindung zu erstellen, umfasst.

9. Verfahren nach Anspruch 8, umfassend, als Reaktion auf Bestimmen, dass das Benutzergerät einen Hybriddatenzugang unterstützt, ferner Bestimmen, ob das Paketdatennetz-Gateway einen Hybridzugang zu dem Paketdatennetz unterstützt, und, wenn dies nicht der Fall ist, Abändern des Signals in der Steuerebene, um eine neue zusätzliche Zugangsverbindung zu erstellen, die eine andere IP-Adresse für das Benutzergerät verwendet als die bestehende Zugangsverbindung, und, wenn dies der Fall ist, Abändern des Signals in der Steuerebene, um eine neue zusätzliche Zugangsverbindung zu erstellen, die eine gleiche IP-Adresse für das Benutzergerät verwendet wie die bestehende Zugangsverbindung.

10. Verfahren nach einem vorhergehenden Anspruch, wobei die Autorisierungsdatenbank weitere Informationen über Eigenschaften des Benutzergeräts und Eigenschaften des Paketdatennetz-Gateways und/oder des Paketdatennetzes und eine Subskription des Benutzergeräts umfasst, wobei das Abändern des Signals in der Steuerebene als Reaktion auf die weiteren Informationen durchgeführt wird.

11. Verfahren nach einem vorhergehenden Anspruch, wobei der Schritt des Abänderns des Signals in der Steuerebene dahingehendes Abändern des Signals in der Steuerebene umfasst, Attribute, die für die Zugangsverbindung erforderlich sind, in Abhängigkeit von aus der Autorisierungsdatenbank abgerufenen Informationen anzugeben.

12. Verfahren nach einem vorhergehenden Anspruch, wobei das Signal in der Steuerebene, das eine Änderung der Zugangsverbindung anfordert, eine Anforderung zum Aufbauen einer neuen Zugangsverbindung, eine Anforderung zum Löschen einer bestehenden Zugangsverbindung oder eine Anforderung zum Umschalten eines Benutzerebenen-Datenpfads von einer Zugangsverbindung zu einer anderen Zugangsverbindung umfasst.

13. Computerprogramm, das bei Ausführung auf einer Datenverarbeitungseinrichtung betreibbar ist zum dahingehenden Steuern der Datenverarbeitungseinrichtung, Schritte in einem Verfahren nach einem der Ansprüche 1 bis 12 durchzuführen.

14. Handover-Steuerung (40), ausgelegt zum Abändern von Signalen in der Steuerebene, um eine Datenübertragung zwischen einem Benutzergerät (22) und einem Paketdatennetz (10) über verschiedene Zugangsverbindungen (27, 72) zu ermöglichen, die jeweils ein anderes Zugangsnetz verwenden, wobei es sich bei mindestens einem um ein nichtzellulares Zugangsnetz handelt, wobei die Handover-Steuerung (40) Folgendes umfasst:
einen Empfänger, betreibbar zum Empfangen eines Signals in der Steuerebene, das eine Änderung einer Zugangsverbindung anfordert, die zum Übertragen von Daten zwischen dem Paketdatennetz und dem Benutzergerät zu verwenden ist;
Zugangslogik, betreibbar, als Reaktion darauf, dass der Empfänger das Signal in der Steuerebene, das die Änderung der Zugangsverbindung anfordert, empfängt, zum Zugreifen auf eine Autorisierungsdatenbank (50), die Informationen bezüglich des Benutzergeräts speichert; und
Steuerlogik, betreibbar zum Analysieren von Informationen, auf die in der Autorisierungsdatenbank zugegriffen wird, und Bestimmen, ob das Benutzergerät eine derzeitige Zugangsverbindung zu dem Paketdatennetz aufweist, und als Reaktion auf Bestimmen, dass das Benutzergerät die derzeitige Zugangsverbindung aufweist, zum Abändern des Signals in der Steuerebene, um ein modifiziertes Signal in der Steuerebene zu erzeugen; und
einen Sender, betreibbar zum Übertragen des modifizierten Steuersignals an ein Paketdatennetz-Gateway, sodass eine zum Übertragen von Daten an das Benutzergerät verwendete Zugangsverbindung geändert wird.

## Revendications

1. Procédé d'amendement de signaux dans le plan de commande pour faciliter un transfert de données entre un équipement utilisateur et un réseau de données par paquets via différentes connexions d'accès chacune utilisant un réseau d'accès différent au moins un étant un réseau d'accès non cellulaire, ledit procédé comprenant :
la réception d'un signal dans le plan de commande demandant un changement dans une connexion d'accès destinée à être utilisée pour transmettre des données entre ledit réseau de données par paquets et ledit équipement utilisateur ;
en réaction à la réception dudit signal dans le plan de commande demandant ledit changement dans ladite connexion d'accès, l'accès à une base de données d'autorisations stockant des informations au sujet dudit équipement utilisateur ; et
la détermination à partir d'informations auxquelles il a été accédé dans ladite base de données d'autorisations pour savoir si ledit équipement utilisateur a une connexion d'accès actuelle audit réseau de données par paquets ; et
en réaction à la détermination du fait que ledit équipement utilisateur a effectivement ladite connexion d'accès actuelle, l'amendement dudit signal dans le plan de commande afin de générer un signal modifié dans le plan de commande et la transmission dudit signal modifié dans ledit plan de commande à une passerelle de réseau de données par paquets de telle sorte qu'une connexion d'accès utilisée pour transmettre des données audit équipement utilisateur soit changée.

2. Procédé selon la revendication 1, comprenant en outre le stockage d'informations au sujet de ladite connexion d'accès destinée à être utilisée pour transmettre lesdites données.

3. Procédé selon n'importe quelle revendication précédente, dans lequel ledit signal dans ledit plan de commande est reçu à partir d'un poste parmi : un dispositif mesurant la qualité de ladite connexion d'accès actuelle et une passerelle de réseau d'accès à connectivité IP.

4. Procédé selon n'importe quelle revendication précédente dans lequel ladite étape d'amendement dudit signal dans ledit plan de commande comprend l'amendement dudit signal de commande pour demander une création d'une nouvelle connexion d'accès avec une même adresse IP pour ledit équipement utilisateur que ladite connexion d'accès actuelle.

5. Procédé selon la revendication 4, dans lequel ladite étape d'amendement dudit signal dans le plan de commande comprend l'amendement dudit signal dans le plan de commande de telle sorte que ladite connexion d'accès actuelle soit rendue dormante, une connexion d'accès dormante étant une connexion d'accès où une adresse IP est encore attribuée audit équipement utilisateur pour ladite connexion d'accès mais ladite connexion d'accès n'est pas utilisée actuellement pour transmettre des données.

6. Procédé selon n'importe quelle revendication précédente, comprenant en outre l'interception de signaux de mise à jour indiquant des changements sur une connexion d'accès dormante de telle sorte que lesdits signaux de mise à jour n'arrivent pas au niveau de ladite passerelle de réseau de données par paquets et le stockage desdits changements indiqués, ladite connexion d'accès dormante étant une connexion d'accès où une adresse IP est encore attribuée audit équipement utilisateur pour ladite connexion d'accès mais ladite connexion d'accès n'est pas utilisée actuellement pour transmettre des données.

7. Procédé selon la revendication 6, dans lequel en réaction à la réception d'un signal de réactivation dans le plan de commande pour réactiver ladite connexion d'accès dormante, ledit signal de réactivation dans le plan de commande est amendé pour indiquer au moins quelques-uns desdits changements indiqués.

8. Procédé selon n'importe laquelle des revendications 1 à 3, dans lequel ladite étape de détermination, comprend en outre la détermination pour savoir si ledit équipement utilisateur prend en charge un accès hybride aux données et s'il en est ainsi l'amendement dudit signal dans le plan de commande pour créer une nouvelle connexion d'accès additionnelle.

9. Procédé selon la revendication 8, comprenant en réaction à la détermination du fait que ledit équipement utilisateur prend effectivement en charge un accès hybride aux données, la détermination en outre pour savoir si ladite passerelle de réseau de données par paquets prend en charge un accès hybride audit réseau de données par paquets et lors d'un non amendement dudit signal dans le plan de commande pour créer une nouvelle connexion d'accès additionnelle en utilisant une adresse IP différente pour ledit équipement utilisateur à ladite connexion d'accès existante et s'il en est ainsi l'amendement dudit signal dans le plan de commande pour créer une nouvelle connexion d'accès additionnelle en utilisant une même adresse IP pour ledit équipement utilisateur à ladite connexion d'accès existante.

10. Procédé selon n'importe quelle revendication précédente, dans lequel ladite base de données d'autorisations comprend des informations supplémentaires concernant des propriétés dudit équipement utilisateur et des propriétés d'au moins un poste parmi ladite passerelle de réseau de données par paquets et ledit réseau de données par paquets, et un abonnement dudit équipement utilisateur, dans lequel l'amendement dudit signal dans le plan de commande est réalisé en réaction auxdites informations supplémentaires.

11. Procédé selon n'importe quelle revendication précédente, dans lequel ladite étape d'amendement dudit signal dans le plan de commande comprend l'amendement dudit signal dans le plan de commande pour indiquer des attributs requis pour ladite connexion d'accès en dépendance d'informations récupérées à partir de ladite base de données d'autorisations.

12. Procédé selon n'importe quelle revendication précédente, dans lequel ledit signal dans le plan de commande demandant un changement dans ladite connexion d'accès comprend une demande parmi une demande pour établir une nouvelle connexion d'accès, une demande pour supprimer une connexion d'accès existante et une demande pour commuter un chemin de données de plan utilisateur depuis une connexion d'accès vers une autre connexion d'accès.

13. Programme informatique qui lorsqu'il est exécuté sur un appareil de traitement de données est exploitable pour commander ledit appareil de traitement de données à réaliser des étapes dans un procédé selon n'importe laquelle des revendications 1 à 12.

14. Organe de commande de transfert (40) configuré pour amender des signaux dans le plan de commande pour faciliter un transfert de données entre un équipement utilisateur (22) et un réseau de données par paquets (10) via différentes connexions d'accès (27, 72) chacune utilisant un réseau d'accès différent au moins un étant un réseau d'accès non cellulaire, ledit organe de commande de transfert (40) comprenant :
un récepteur exploitable pour recevoir un signal dans le plan de commande demandant un changement dans une connexion d'accès destinée à être utilisée pour transmettre des données entre ledit réseau de données par paquets et ledit équipement utilisateur ;
une logique d'accès exploitable en réaction au fait que ledit récepteur a reçu ledit signal dans le plan de commande demandant ledit changement dans ladite connexion d'accès, pour accéder à une base de données d'autorisations (50) stockant des informations au sujet dudit équipement utilisateur ; et
une logique de commande exploitable pour analyser des informations auxquelles il a été accédé dans ladite base de données d'autorisations et déterminer si ledit équipement utilisateur a une connexion d'accès actuelle audit réseau de données par paquets et en réaction à la détermination du fait que ledit équipement utilisateur a effectivement une connexion d'accès actuelle pour amender ledit signal dans le plan de commande générer un signal modifié dans le plan de commande ; et
un émetteur exploitable pour transmettre ledit signal de commande modifié à une passerelle de réseau de données par paquets de telle sorte qu'une connexion d'accès utilisée pour transmettre des données audit équipement utilisateur soit changée.
